# EUROPEAN PATENT APPLICATION

(11) **EP 2 811 586 A1**
(43) Date of publication of application: **10.12.2014**
(21) Application number: 14168894.5
(22) Date of filing: 19.05.2014
(51) Int. Cl.: H01R 13/629, H01R 13/707, H01R 13/70, B60L 3/00, H01H 9/00

(54) **Connector device**

(30) Priority: 06.06.2013 JP 2013119742
(71) Applicant: JAPAN AVIATION ELECTRONICS INDUSTRY LIMITED, Shibuya-ku Tokyo 150-0043 (JP)
(72) Inventor: Kuwahara, Akira, Tokyo, 150-0043 (JP); Nakamura, Yuichiro, Tokyo, 150-0043 (JP); Hashiguchi, Osamu, Tokyo, 150-0043 (JP)
(74) Representative: Prüfer & Partner GbR European Patent Attorneys

(57) **Abstract**

A connector device comprises a first connector (100), a first detection connector (200), a second connector (500) and an operation member (300). The first connector (100) includes a first housing (110) holding a first power terminal (170). The first detection connector (200) includes a first detection-terminal (240). The first detection connector is held by the first housing and is movable between a first position and a second position along a first direction. The second connector (500) includes a second housing (510) holding a second power terminal (550) and a second detection-terminal (630). The operation member (300) is attached to the first housing (110). When the operation member is turned, the first connector is moved along the first direction, and the first power terminal is connected to the second power terminal. Subsequently, when the operation member is moved along a second direction, the first detection connector is moved from the first position to the second position, and the first detection-terminal is connected to the second detection-terminal.

## Description

### BACKGROUND OF THE INVENTION:

This invention relates to a connector device which is installed in a transmission path of electric power supplied from an electric power system, for example, of an electric car or a hybrid car.

For example, this type of connector device is disclosed in JP-A 2012-79644 (Patent Document 1), the content of which is incorporated herein by reference.

As shown in Fig. 45, the connector device 900 of Patent Document 1 comprises a first connector 910, a second connector 920 and an operation member 930. The operation member 930 is attached to the first connector 910. The operation member 930 is provided with a first detection connector 940, while the second connector 920 is provided with a second detection connector 950.

When the operation member 930 is turned, the first connector 910 is mated with the second connector 920. Subsequently, when the operation member 930 is slid, the first detection connector 940 is mated with the second detection connector 950. In the connector device 900 of Patent Document 1, the timing when the first detection connector 940 is mated with the second detection connector 950 is clearly different from the timing when the first connector 910 is mated with the second connector 920. Accordingly, an operator of the connector device 900 can be prevented from being electrically shocked.

As for the connector device 900 of Patent Document 1, various problems might occur because a direction along which the first connector 910 is mated with the second connector 920 is perpendicular to another direction along which the first detection connector 940 is mated with the second detection connector 950. For example, when the second connector 920 and the second detection connector 950 are connected to a cable and a detection signal line, respectively, the cable and the detection signal line are pulled out along different directions from each other. Accordingly, it is cumbersome to pull around the cable and the detection signal line. Moreover, the first detection connector 940 and the second detection connector 950 protrude outward from the first connector 910 and the second connector 920, respectively. Accordingly, when the connector device 900 is attached within an electric car or a hybrid car, a large accommodation space and a large working space is needed.

### SUMMARY OF THE INVENTION:

It is therefore an object of the present invention to provide a connector device having a structure which does not need a large accommodation space nor a large working space.

One aspect of the present invention provides a connector device comprising a first connector, a first detection connector, a second connector and an operation member. The first connector includes a first housing and a first power terminal. The first power terminal is held by the first housing. The first detection connector includes a first detection terminal. The first detection connector is held by the first housing and is movable relative to the first housing between a first position and a second position along a first direction. The second connector includes a second power terminal, a second detection terminal and a second housing. The second power terminal and the second detection terminal are held by the second housing. The second connector is mateable with the first connector along the first direction. The operation member is attached to the first housing. The operation member is movable relative to the first housing by each of a first operation and a second operation. The first operation is an operation which turns the operation member. The second operation is another operation which moves the operation member along a second direction perpendicular to the first direction. The first operation moves the first connector along the first direction relative to the second connector and connects the first power terminal to the second power terminal. The second operation subsequent to the first operation moves the first detection connector along the first direction from the first position to the second position and connects the first detection terminal to the second detection terminal.

According to the present invention, the first detection connector is held by the first housing so as to be movable relative to the first housing along the first direction which is a mating direction of the first connector with the second connector. Accordingly, a power line such as a cable for the second power terminal and a detection line for the second detection terminal can be pulled out, for example, from a bottom side of the second connector. Moreover, according to the present invention, the first detection connector and the second detection connector do not protrude outward. Accordingly, when the connector device is installed, no large accommodation space is needed. Moreover, when the connector device is operated, no large working space is needed.

An appreciation of the objectives of the present invention and a more complete understanding of its structure may be had by studying the following description of the preferred embodiment and by referring to the accompanying drawings.

### BRIEF DESCRIPTION OF THE DRAWINGS:

Fig. 1 is a perspective view showing a first connector according to an embodiment of the present invention.
Fig. 2 is another perspective view showing the first connector of Fig. 1.
Fig. 3 is still another perspective view showing the first connector of Fig. 1.
Fig. 4 is a side view showing the first connector of Fig. 1.
Fig. 5 is an exploded, perspective view showing the first connector of Fig. 1.
Fig. 6 is a cross-sectional view showing the first connector of Fig. 4, taken along line VI-VI.
Fig. 7 is a partially cut-away, perspective view showing the first connector of Fig. 6.
Fig. 8 is a front view showing the first connector of Fig. 1.
Fig. 9 is a cross-sectional view showing the first connector of Fig. 8, taken along line IX-IX.
Fig. 10 is an enlarged, perspective view showing a part of the first connector of Fig. 3.
Fig. 11 is an enlarged, side view showing a part of the first connector of Fig. 4.
Fig. 12 is an enlarged, cross-sectional view showing a part of the first connector of Fig. 6.
Fig. 13 is an enlarged, perspective view showing a part of the first connector of Fig. 7.
Fig. 14 is a perspective view showing a second connector according to the embodiment of the present invention.
Fig. 15 is another perspective view showing the second connector of Fig. 14.
Fig. 16 is an exploded, perspective view showing the second connector of Fig. 14.
Fig. 17 is a side view showing a connector device according to the embodiment of the present invention, wherein the first connector of Fig. 1 and the second connector of Fig. 14, which are included in the connector device, are not yet mated with each other.
Fig. 18 is a rear view showing the connector device of Fig. 17.
Fig. 19 is a cross-sectional view showing the connector device of Fig. 18, taken along line XIX-XIX.
Fig. 20 is a cross-sectional view showing the connector device of Fig. 18, taken along line XX-XX.
Fig. 21 is a side view showing the connector device of Fig. 17, wherein the connector device is in a first operation.
Fig. 22 is a cross-sectional view showing the connector device of Fig. 21, taken along line XIX-XIX of Fig. 18.
Fig. 23 is a cross-sectional view showing the connector device of Fig. 21, taken along line XX-XX of Fig. 18.
Fig. 24 is a side view showing the connector device of Fig. 17, wherein the first operation is completed.
Fig. 25 is a rear view showing the connector device of Fig. 24.
Fig. 26 is a cross-sectional view showing the connector device of Fig. 24, taken along line XIX-XIX of Fig. 18.
Fig. 27 is a cross-sectional view showing the connector device of Fig. 24, taken along line XX-XX of Fig. 18.
Fig. 28 is a cross-sectional view showing the connector device of Fig. 25, taken along line XXVIII-XXVIII.
Fig. 29 is a cross-sectional view showing the connector device of Fig. 25, taken along line XXIX-XXIX.
Fig. 30 is a side view showing the connector device of Fig. 17, wherein the connector device is in a second operation.
Fig. 31 is a cross-sectional view showing the connector device of Fig. 30, taken along line XIX-XIX of Fig. 18.
Fig. 32 is a cross-sectional view showing the connector device of Fig. 30, taken along line XXVIII-XXVIII of Fig. 25.
Fig. 33 is a cross-sectional view showing the connector device of Fig. 30, taken along line XXIX-XXIX of Fig. 25.
Fig. 34 is a side view showing the connector device of Fig. 17, wherein the second operation is completed.
Fig. 35 is a cross-sectional view showing the connector device of Fig. 34, taken along line XIX-XIX of Fig. 18.
Fig. 36 is a cross-sectional view showing the connector device of Fig. 34, taken along line XXVIII-XXVIII of Fig. 25.
Fig. 37 is a cross-sectional view showing the connector device of Fig. 34, taken along line XXIX-XXIX of Fig. 25.
Fig. 38 is a side view showing the connector device of Fig. 17, wherein the illustrated first detection connector of the connector device is not located at a first position.
Fig. 39 is a cross-sectional view showing a part of the connector device of Fig. 38, taken along line XXIX-XXIX.
Fig. 40 is a side view showing the connector device of Fig. 38, wherein the connector device is in the first operation.
Fig. 41 is a cross-sectional view showing a part of the connector device of Fig. 40, taken along line XLI-XLI.
Fig. 42 is a side view showing the connector device of Fig. 38, wherein the connector device is in the first operation and is in a state subsequent to another state illustrated in Fig. 40.
Fig. 43 is a cross-sectional view showing a part of the connector device of Fig. 42, taken along line XLIII-XLIII.
Fig. 44 is a perspective view showing a connector device according to a modification.

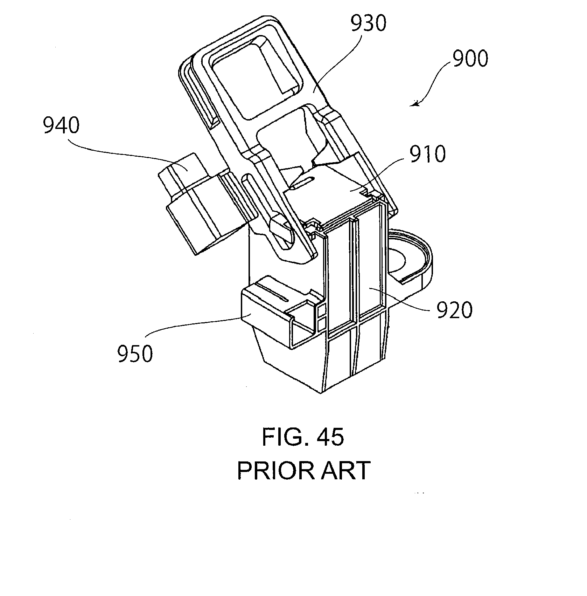

Fig. 45 is a perspective view showing a connector device of Patent Document 1.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DESCRIPTION OF PREFERRED EMBODIMENTS:

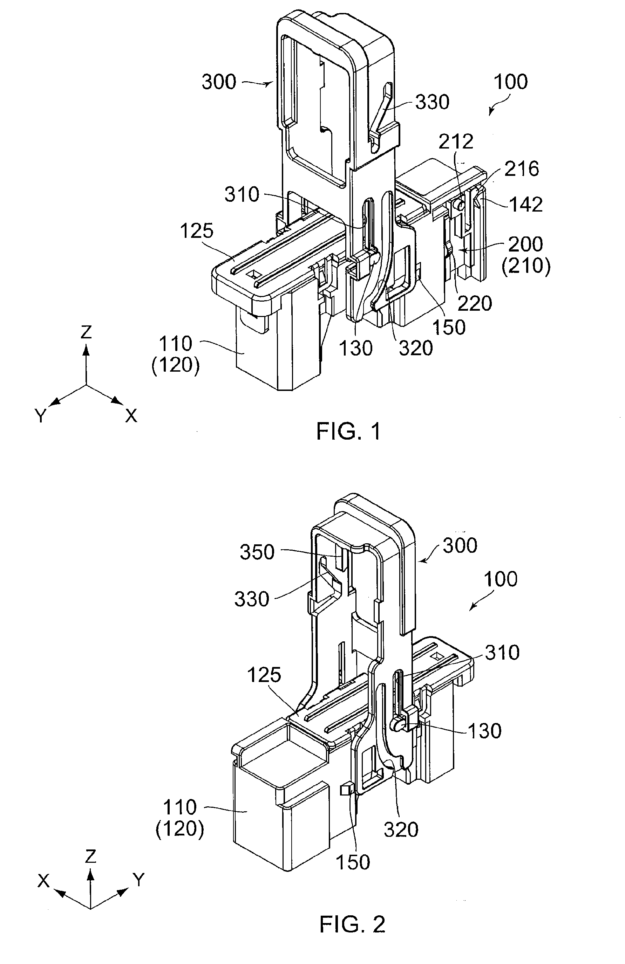

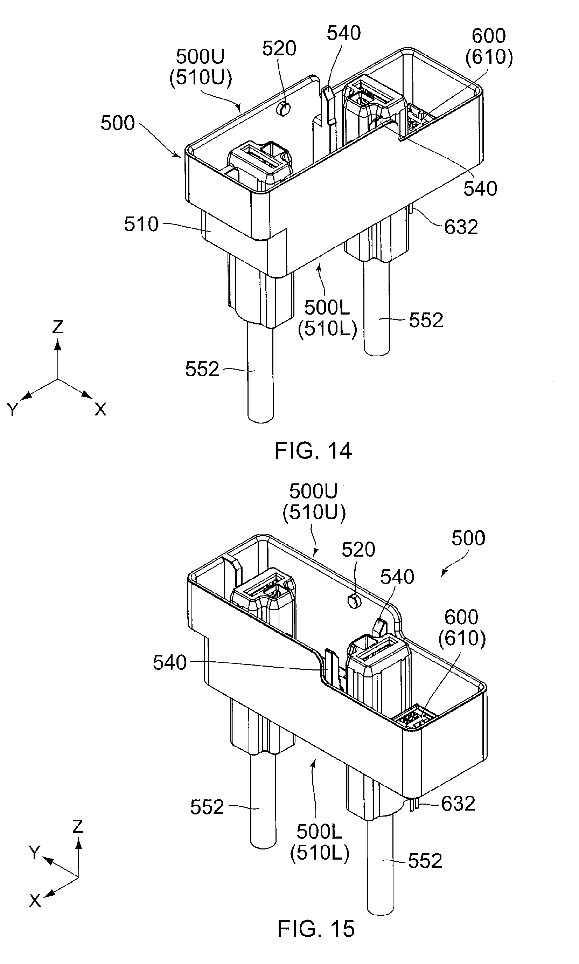

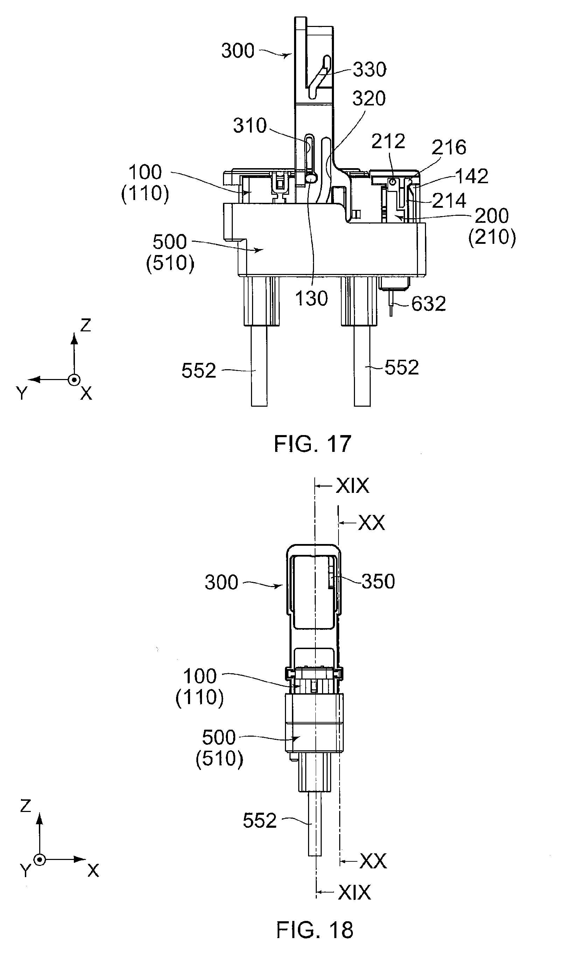

Referring to Figs.1 and 14, a connector device according to an embodiment of the present invention comprises a first connector 100, a first detection connector 200, an operation member 300 and a second connector 500. As shown in Figs. 17 to 29, the first connector 100 is mateable with the second connector 500 along the Z-direction (a first direction or an up-down direction).

As shown in Figs. 1 to 5, the first connector 100 includes a first housing 110 made of an insulator and a first power terminal 170 made of an inductor. The first detection connector 200 is installed in the first connector 100 to be in a state where the first detection connector 200 is movable relative to the first connector 100. In detail, the first detection connector 200 is held by the first housing 110 and is movable relative to the first housing 110 along the Z-direction. The operation member 300 is made of an insulator. The operation member 300 is attached to the first connector 100 to be movable relative to the first connector 100. In detail, the operation member 300 is attached to the first housing 110 and is movable relative to the first housing 110 by each of a first operation and a second operation. The first operation is an operation which turns the operation member 300 toward the first connector 100. The second operation is another operation which moves the operation member 300 relative to the first connector 100 along the Y-direction (a second direction or a front-rear direction).

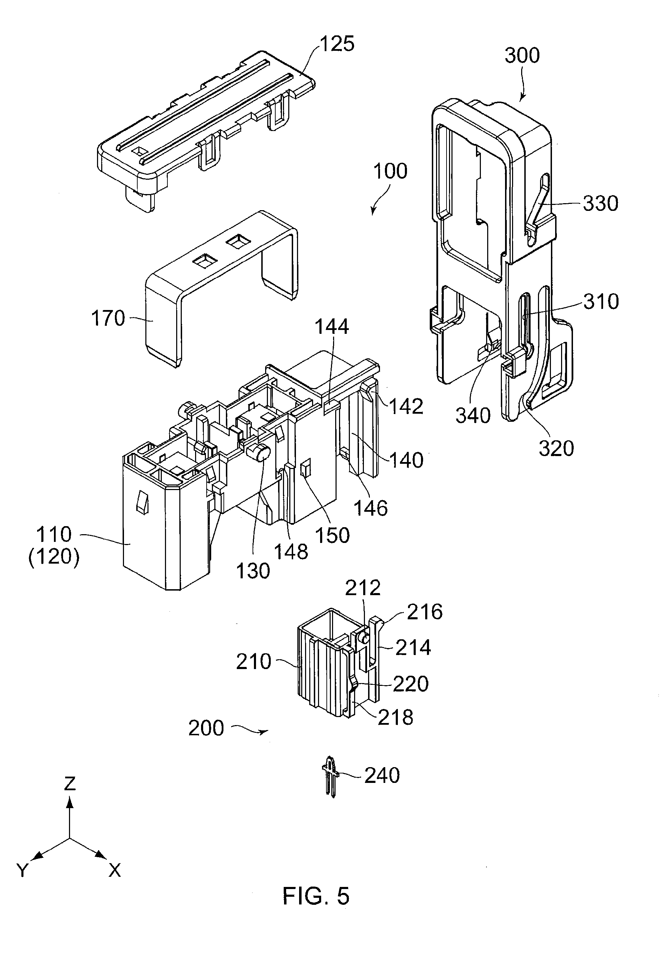

As shown in Fig. 5, the first housing 110 has a body portion 120 and a cover 125 which covers the positive Z-side (upper side) of the body portion 120. The body portion 120 is formed with two guided protrusions 130, an accommodation portion 140, a temporally holding portion 142, a regulation ditch 144, a removal-prevention protrusion 146, two temporally prevention portions 148 and two prevention portions 150. The guided protrusions 130 are located at opposite sides (opposite side surfaces) of the body portion 120 in the X-direction (a third direction or a left-right direction), respectively, while protruding outward in the X-direction. The accommodation portion 140 is formed in the negative Y-side (rear side) of the first housing 110. The accommodation portion 140 is a space for accommodating the first detection connector 200 in a state where the first detection connector 200 is movable along the Z-direction. The temporally holding portion 142 is a protrusion protruding forward along the positive Y-direction. The temporally holding portion 142 is located in the vicinity of the positive Z-side end (upper end) of the accommodation portion 140. The regulation ditch 144 is a ditch which extends along the Y-direction (the second direction or the front-rear direction) while being recessed inward in the X-direction. The regulation ditch 144 is located toward the positive Z-side of, or above, the temporally holding portion 142. The regulation ditch 144 partially communicates with the accommodation portion 140. The removal-prevention protrusion 146 is located in the vicinity of the negative Z-side end (lower end) of the accommodation portion 140. The removal-prevention protrusion 146 protrudes forward along the positive Y-direction. The temporally prevention portions 148 are steps which are formed at the opposite side surfaces of the body portion 120, respectively. The prevention portions 150 are formed at the opposite side surfaces of the body portion 120, respectively, to protrude outward in the X-direction. The temporally prevention portion 148 is located between the guided protrusion 130 and the prevention portion 150 in the Y-direction. The prevention portions 150 is located between the temporally prevention portion 148 and the accommodation portion 140 in the Y-direction.

As can be seen from Fig. 5, the first power terminal 170 is installed into the body portion 120 of the first housing 110 from the positive Z-side (upper side) thereof to be held by the body portion 120. The cover 125 is attached to the body portion 120 to cover the positive Z-side of the first power terminal 170 held by the body portion 120. The illustrated first connector 100 does not include a fuse. However, the first power terminal 170 may be divided into two parts which are connected with each other via a fuse located therebetween.

As shown in Fig. 5, the first detection connector 200 includes a first detection housing 210 made of an insulator and a first detection terminal 240 made of an conductor. The first detection housing 210 is accommodated in the accommodation portion 140 to be movable in the Z-direction. The first detection terminal 240 is fixed to and held by the first detection housing 210.

Hereafter, the positive Z-side limit position (upper limit position) of the first detection connector 200 relative to the first housing 110 is referred to as a first position, while the negative Z-side limit position (lower limit position) of the first detection connector 200 relative to the first housing 110 is referred to as a second position. The first detection connector 200 is movable relative to the first housing 110 along the Z-direction between the first position and the second position. Even when the first connector 100 and the second connector 500 are mated with each other, the first detection connector 200 located at the first position is not mated with a second detection connector 600 which is described later.

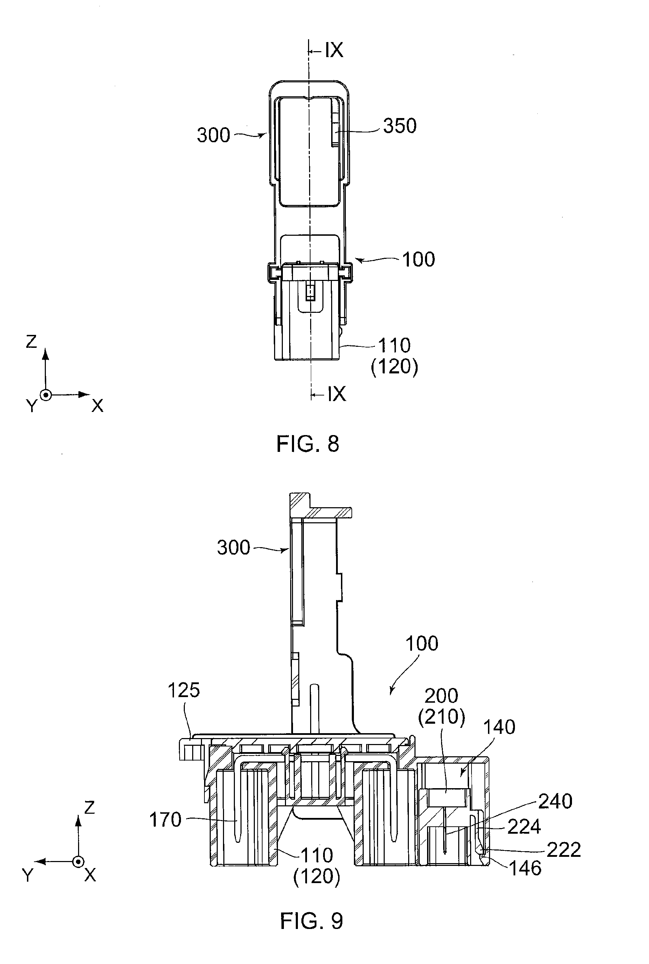

As shown in Fig. 5, the first detection housing 210 is formed with a second cam protrusion 212, a resilient support portion 214, a temporally holding protrusion 216, a resilient support portion 218 and a first position-adjustment protrusion 220. In addition, as shown in Fig. 9, the first detection housing 210 has an abutment portion 222 and an arm 224.

As shown in Fig. 5, the second cam protrusion 212 is located at the positive Z-side end (upper end) of the first detection housing 210. The second cam protrusion 212 protrudes outward in the X-direction. More specifically, the second cam protrusion 212 according to the present embodiment protrudes in the positive X-direction.

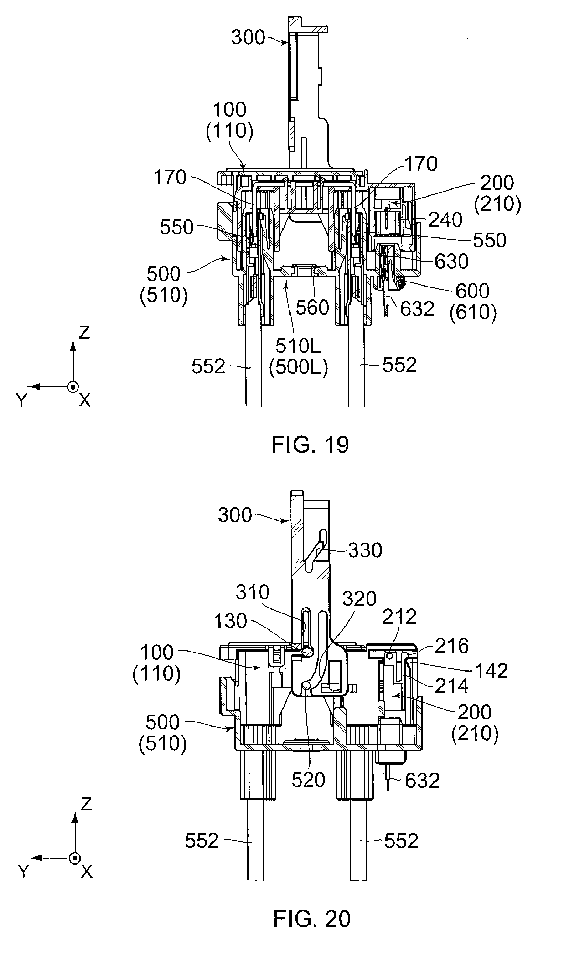

As shown in Fig. 5, the resilient support portion 214 is located at the negative Y-side (rear side) of the first detection housing 210. The resilient support portion 214 extends upward along the positive Z-direction to have a free end at its upper end. The temporally holding protrusion 216 is a protrusion protruding rearward along the negative Y-direction. The temporally holding protrusion 216 is supported by the resilient support portion 214. The temporally holding protrusion 216 is movable in the YZ-plane by using resilient deformation of the resilient support portion 214. As shown in Figs. 17 and 20, when the first detection connector 200 is located at the first position, the temporally holding protrusion 216 is located on the positive Z-side (upper side) of the temporally holding portion 142. Accordingly, the temporally holding portion 142 blocks the temporally holding protrusion 216 to keep the first detection connector 200 at the first position. Thus, under a pre-mated state where the first connector 100 is not mated with the second connector 500, the temporally holding portion 142 temporally holds the first detection connector 200 at the first position. When a downward force along the negative Z-direction is applied to the first detection connector 200, the resilient support portion 214 is bent to release the temporally holding protrusion 216 from the block by the temporally holding portion 142. More specifically, because the temporally holding protrusion 216 surmounts the temporally holding portion 142, the first detection connector 200 becomes to be movable toward the second position. When the first detection connector 200 is located at the second position, the temporally holding protrusion 216 is under the negative Z-side (lower side) of the temporally holding portion 142. If an upward force along the positive Z-direction is applied to the first detection connector 200 located at the second position, the temporally holding protrusion 216 is pressed against the negative Z-side (lower side) of the temporally holding portion 142 so that the resilient support portion 214 is bent. Accordingly, because the temporally holding protrusion 216 surmounts the temporally holding portion 142, the first detection connector 200 is located at the first position.

As shown in Fig. 5, the resilient support portion 218 extends in the Z-direction (up-down direction) while being fixed to the first detection housing 210 at its opposite ends. The first position-adjustment protrusion 220 protrudes in the positive X-direction (orthogonal direction) from the middle part of the resilient support portion 218 in the Z-direction. The first position-adjustment protrusion 220 is movable in the XZ-plane by using resilient deformation of the resilient support portion 218. Explanation is made later about the action and the function of the resilient support portion 218 and the first position-adjustment protrusion 220.

As shown in Fig. 9, the abutment portion 222 and the arm 224 are formed at the negative Y-side portion (rear portion) of the first detection housing 210. The arm 224 extends downward along the negative Z-direction to have a free end at its lower end. The abutment portion 222 is provided at the lower end (free end) of the arm 224. When the first detection connector 200 is located at the second position, the abutment portion 222 is in abutment with the removal-prevention protrusion 146. Accordingly, the first detection connector 200 is unmovable in the negative Z-direction (downward) beyond the second position. In other words, the removal-prevention protrusion 146 prevents the first detection connector 200 from passing the second position to be removed from the first housing 110. The first detection connector 200 according to the present embodiment is inserted into the accommodation portion 140 of the first housing 110 from the negative Z-side (lower side) thereof to be held in the accommodation portion 140. Upon the insertion of the first detection connector 200, the abutment portion 222 is surmountable the removal-prevention protrusion 146 because of resilient deformation of the arm 224. However, the present invention is not limited thereto. For example, the arm 224 may not be provided. In detail, the removal-prevention protrusion 146 may be formed not integrally with the first housing 110 but separately from the first housing 110. In this case, the removal-prevention protrusion 146 may be attached to the first housing 110 so as to be located toward the negative Z-side of the abutment portion 222 after the first detection connector 200 is arranged inside of the accommodation portion 140. In this case, the arm 224 can be omitted.

As shown in Figs. 1 to 7, the operation member 300 is formed with two guide ditches 310, two first cam ditches 320, a second cam ditch 330, two lock portions 340 and a regulated portion 350.

As shown in Figs. 1 to 4, the guide ditches 310 receive the guided protrusions 130, respectively. The guided protrusions 130 are movable in the guided protrusions 130, respectively. According to the present embodiment, the guided protrusions 130 are guided by the guide ditches 310 in each of the first operation (the operation that turns the operation member 300) and the second operation (the other operation that horizontally moves the operation member 300). In other words, the guide ditches 310 are portions for guiding the first operation and the second operation.

As shown in Figs. 1 to 4, each of the first cam ditches 320 is a ditch having an open end. Under a state where the operation member 300 is stood up or lifted up, the minimum distance between the guided protrusion 130 and the first cam ditch 320 in the Z-direction is longer than the minimum distance between the guided protrusion 130 and the first cam ditch 320 in the Y-direction. The minimum distance between the guided protrusion 130 and the first cam ditch 320 in the Z-direction becomes shorter as the operation member 300 is inclined. Explanation is made later about the action and the function of the first cam ditches 320.

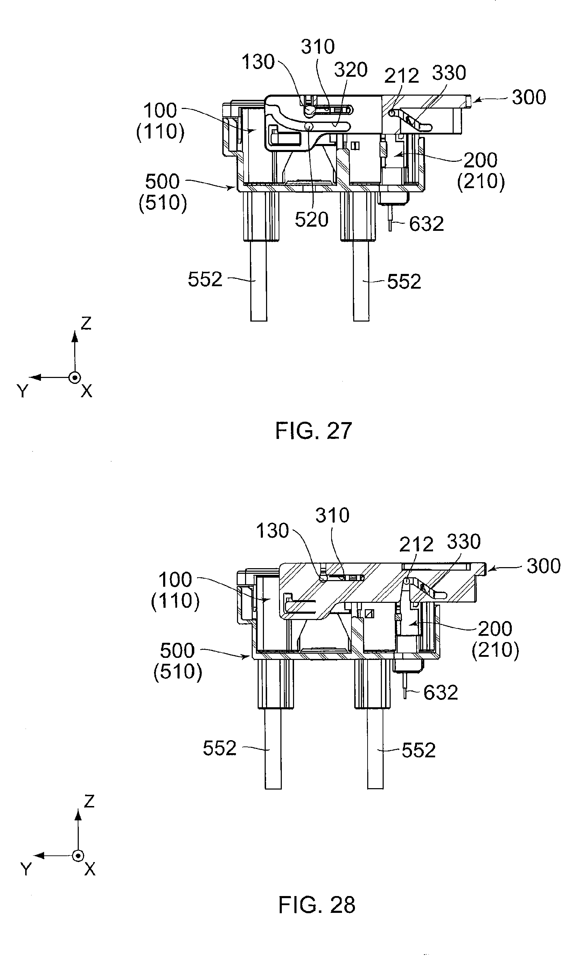

As best shown in Fig. 2, under the state where the operation member 300 is stood up or lifted up, the second cam ditch 330 extends to the negative Y-side end of the operation member 300. As shown in Fig. 28, under another state where the operation member 300 is turned, the second cam ditch 330 extends to the negative Z-side end of the operation member 300. Accordingly, when the operation member 300 is turned, the second cam protrusion 212 is received into the second cam ditch 330 from the negative Z-side (lower side) thereof.

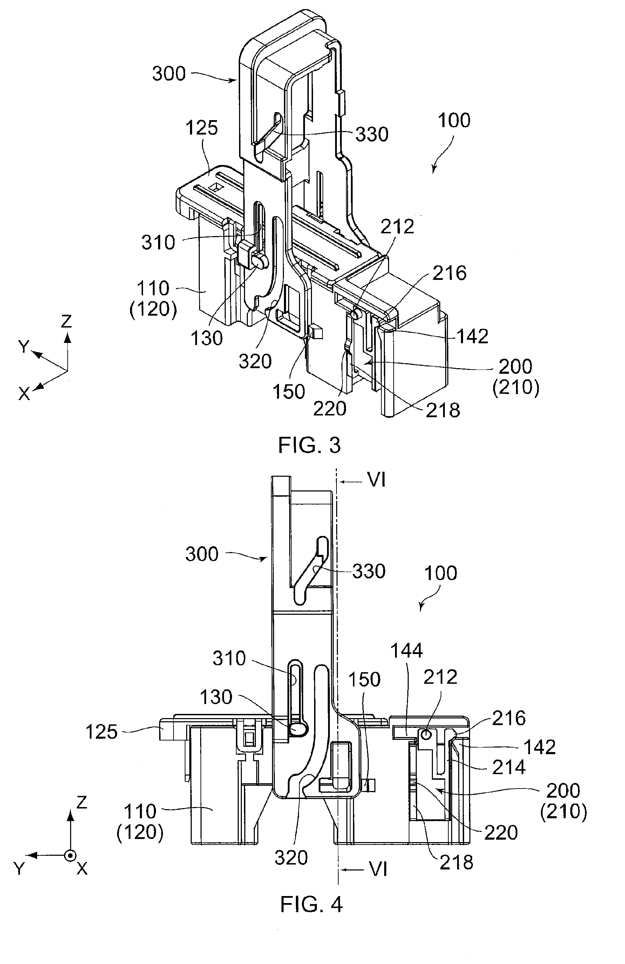

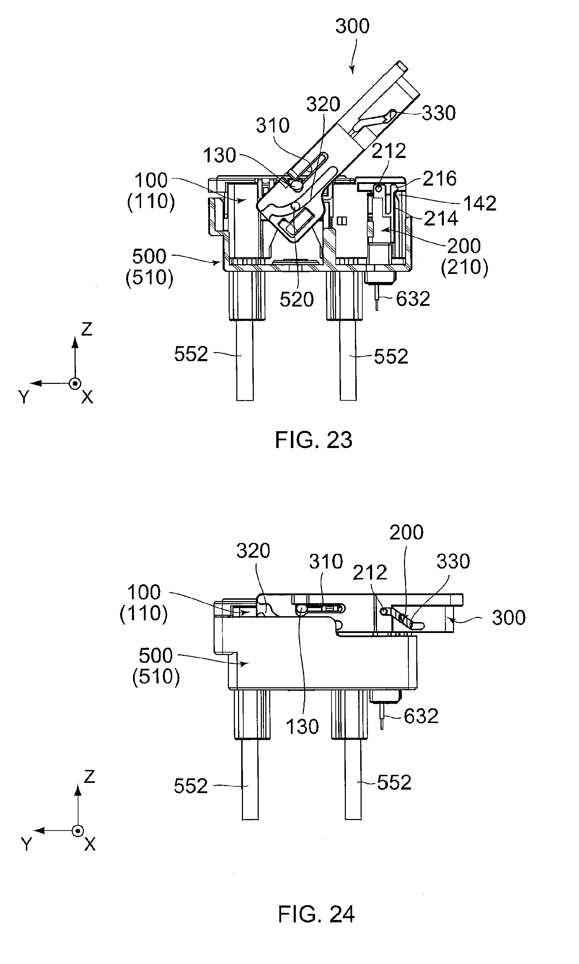

As best shown in Fig. 4, the second cam ditch 330 has an oblique portion which extends in a direction oblique to the Y-direction and the Z-direction under the state where the operation member 300 is stood up or lifted up. In detail, under the state where the operation member 300 is stood up or lifted up, the oblique portion of the second cam ditch 330 is inclined in the negative Y-direction while being apart from the guided protrusion 130 in the Z-direction. As shown in Figs. 24, 30 and 34, under the state where the operation member 300 is turned, the oblique portion of the second cam ditch 330 is inclined in the negative Z-direction (downward) while being apart from the guided protrusion 130 in the Y-direction. Accordingly, in the second operation, the second cam ditch 330, which receives the second cam protrusion 212, transmits a movement of the operation member 300 along the Y-direction (second direction) to the second cam protrusion 212 as another movement along the Z-direction (first direction), especially, as a downward movement along the negative Z-direction. In other words, in the second operation, the second cam ditch 330 receives the second cam protrusion 212 and applies a force along the Z-direction to the second cam protrusion 212.

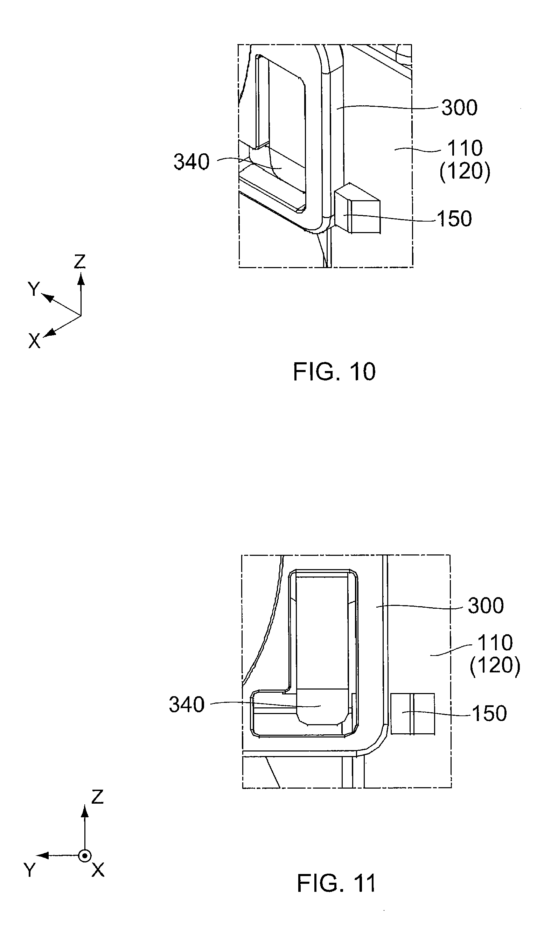

As shown in Figs. 3, 4, 10 and 11, under the state where the operation member 300 is stood up or lifted up, each of the prevention portions 150 is located close to the negative Y-side (rear side) of the operation member 300. Moreover, the prevention portion 150 is located toward the negative Y-side and the negative Z-side of the guided protrusion 130. In other words, the prevention portion 150 is located rearward of the guided protrusion 130 and below the guided protrusion 130. Accordingly, when the operation member 300 according to the present embodiment is turned around the guided protrusion 130, the operation member 300 is turnable only in a regular direction along which the positive Z-side portion (upper portion) of the operation member 300 is moved along the negative Y-direction and the negative Z-direction (rearward and downward). In detail, even if the operation member 300 is forced to be turned in a direction opposite to the regular direction, the operation member 300 is unable to be turned because the operation member 300 is brought into abutment with the prevention portion 150 of the first housing 110. Thus, the prevention portion 150 prevents the operation member 300 from being turned in the direction opposite to the regular direction.

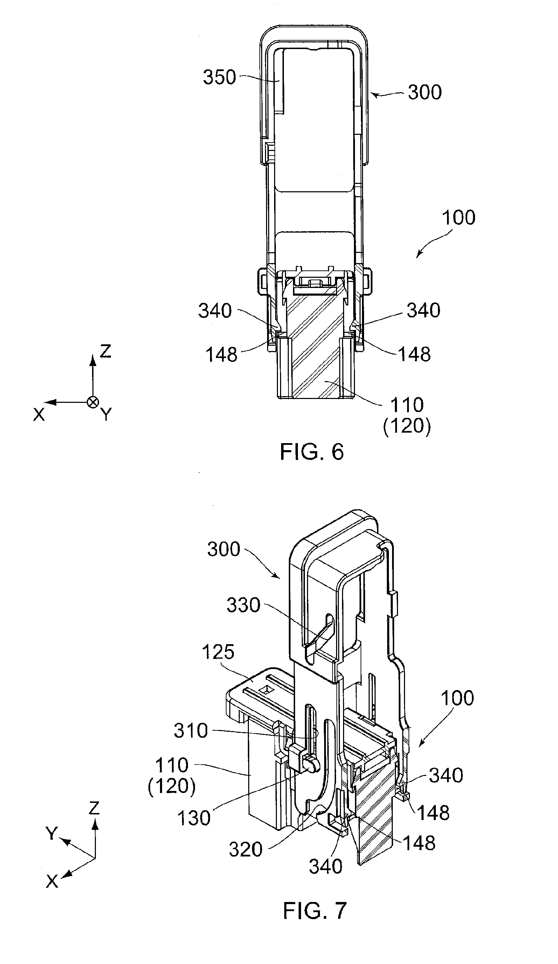

Moreover, the operation member 300 according to the present embodiment is not turnable in the regular direction under the pre-mated state where the first connector 100 and the second connector 500 is not mated with each other. In detail, as shown in Figs. 6, 7, 12 and 13, under the pre-mated state, the operation member 300 is stood up or lifted up. Under this pre-mated state, the operation member 300 is locked to be inoperable because the lock portion 340 of the operation member 300 is to be brought into abutment with the temporally prevention portion 148 of the first housing 110. As described later, the lock of the operation member 300 can be unlocked by using a part of the second connector 500. Thus, until the first connector 100 begins to be mated with the second connector 500, the temporally prevention portion 148 temporally prevents the operation member 300 from being turned.

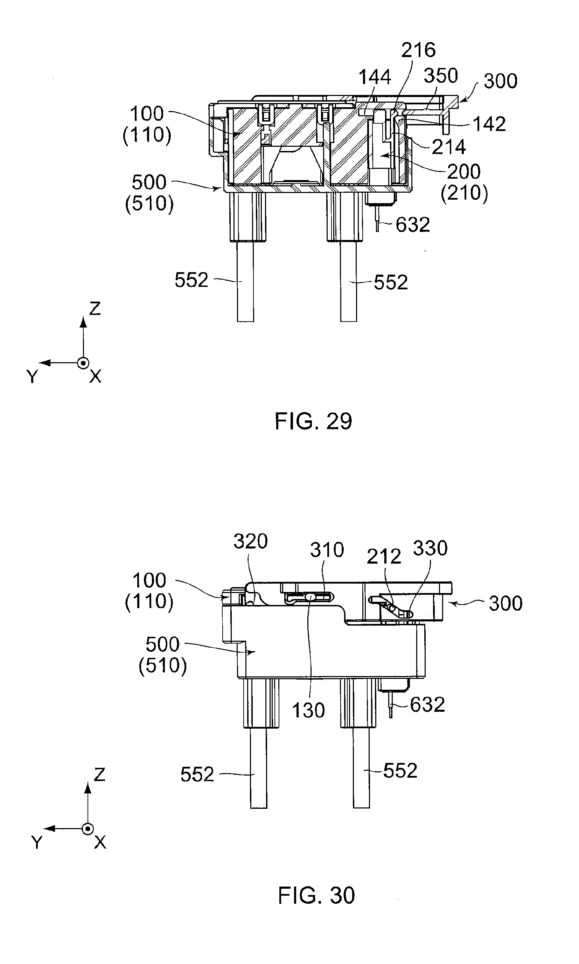

As shown in Figs. 2 and 6, the regulated portion 350 is a kind of a rail protruding inward in the X-direction. The regulated portion 350 extends in the Z-direction under the state where the operation member 300 is stood up or lifted up. Accordingly, the regulated portion 350 extends in the Y-direction under the state where the operation member 300 is turned. As shown in Figs. 29, 33 and 37, in the second operation, the regulated portion 350 is inserted in the regulation ditch 144 along the Y-direction to prevent the operation member 300 from being lifted up. Accordingly, the operation member 300 cannot be lifted up nor stood up during the second operation.

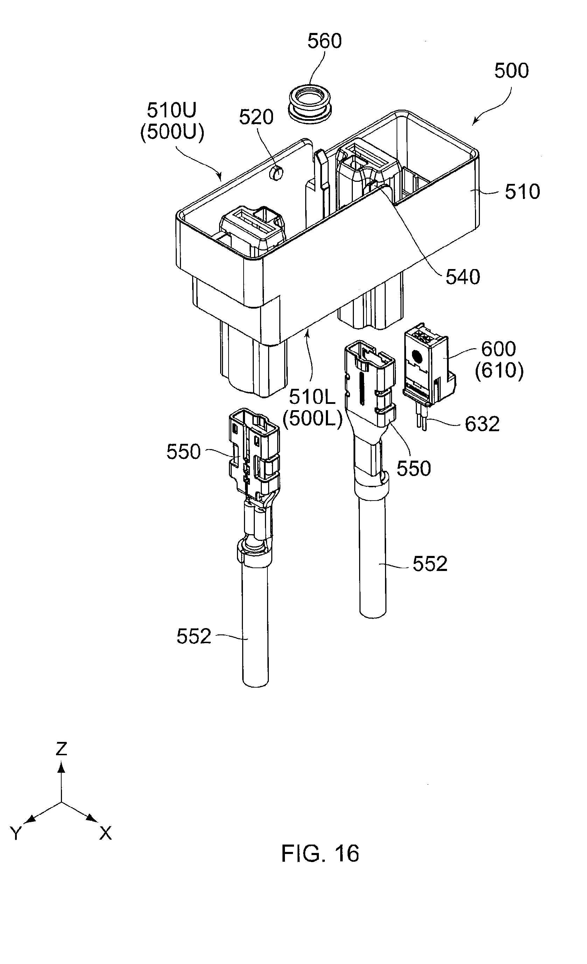

Referring to Figs. 14 to 16, the second connector 500 includes a second housing 510 made of an insulator and two second power terminals 550 each made of an inductor. Moreover, the second connector 500 includes the second detection connector 600 installed therewithin. The second detection connector 600 according to the present embodiment is, unlike the first detection connector 200, fixed to the second housing 510. Accordingly, the second detection connector 600 is unmovable relative to the second housing 510. As can be seen from Figs. 16 and 19, the second connector 500 includes a collar 560 which is attached to a bottom portion 500L thereof, or attached to a bottom portion 510L of the second housing 510. The collar 560 is used for fixing the second connector 500. For example, when the second connector 500 is attached to a panel (not shown), a bolt (not shown) or the like is inserted into the collar 560 to fix the second connector 500.

As shown in Fig. 16, the second power terminals 550 are connected to cables (power lines) 552, respectively. The second power terminals 550 are inserted from the bottom portion 510L of the second housing 510 to be installed in and held by the second housing 510. As shown in Fig. 19, the second detection connector 600 includes a second detection housing 610 made of an insulator and two second detection terminals 630 each made of a conductor. The second detection terminals 630 are installed in and held by the second housing 510. The second detection terminals 630 are connected to signal detection lines 632, respectively. Thus, the second detection connector 600 is connected with the signal detection lines 632. As shown in Fig. 16, the second detection connector 600 is also inserted from the bottom portion 510L of the second housing 510 to be installed in and held by the second housing 510. As a result, the cables 552 and the signal detection lines 632 extend outside from the bottom portion 510L of the second housing 510.

The second connector 500 has an upper portion 500U. The upper portion 500U, or an upper portion 510U of the second housing 510, opens upward. Accordingly, the second connector 500 is partially receivable the first connector 100 when the first connector 100 is mated with the second connector 500. In detail, the first connector 100 is to be inserted and received into the second connector 500 from the upper portion 500U toward the bottom portion 500L.

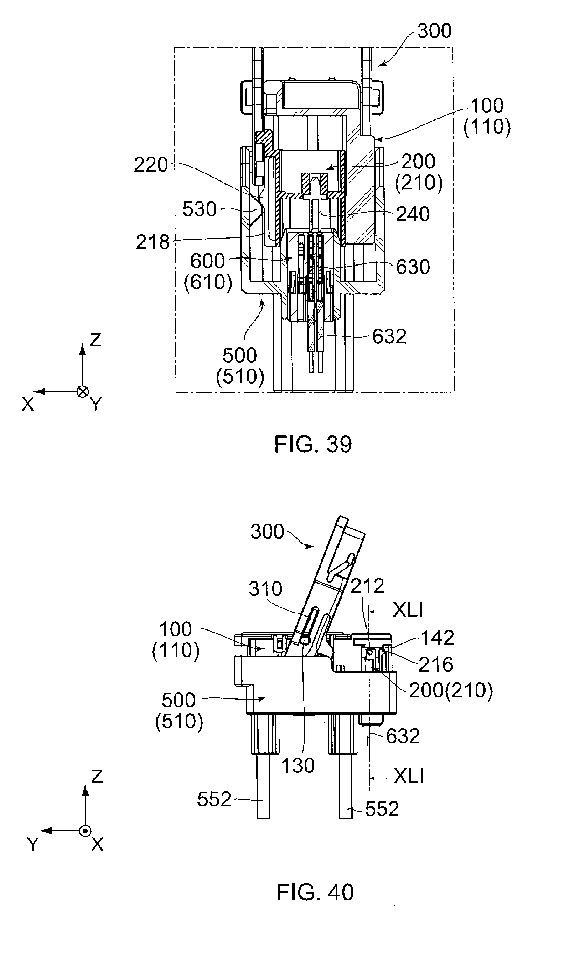

As shown in Figs. 14 to 16, the second housing 510 is formed with two first cam protrusions 520 and two unlock portions 540. The first cam protrusions 520 protrude inward in the X-direction. Each of the unlock portions 540 has a stick-like shape extending along the positive Z-direction. Moreover, as shown in Figs. 39, 41 and 43, the second housing 510 is formed with a second position-adjustment protrusion 530 protruding inward in the X-direction (orthogonal direction). The second position-adjustment protrusion 530 is formed at a position which is nearer to the second detection connector 600 than the second power terminals 550.

As shown in Figs. 20, 23 and 27, the first cam protrusions 520 are received in the first cam ditches 320 of the operation member 300, respectively, when the first connector 100 is mated with the second connector 500. Because of the previously mentioned positional relation between the first cam ditch 320 and the guided protrusion 130, a distance between the first cam protrusion 520 and the guided protrusion 130 after the first operation becomes shorter than that before the first operation. Accordingly, the first connector 100 can be moved to be close to and mated with the second connector 500 by the first operation. In other words, the first operation moves the first connector 100 along the Z-direction relative to the second connector 500 and connects the first power terminal 170 to the second power terminals 550.

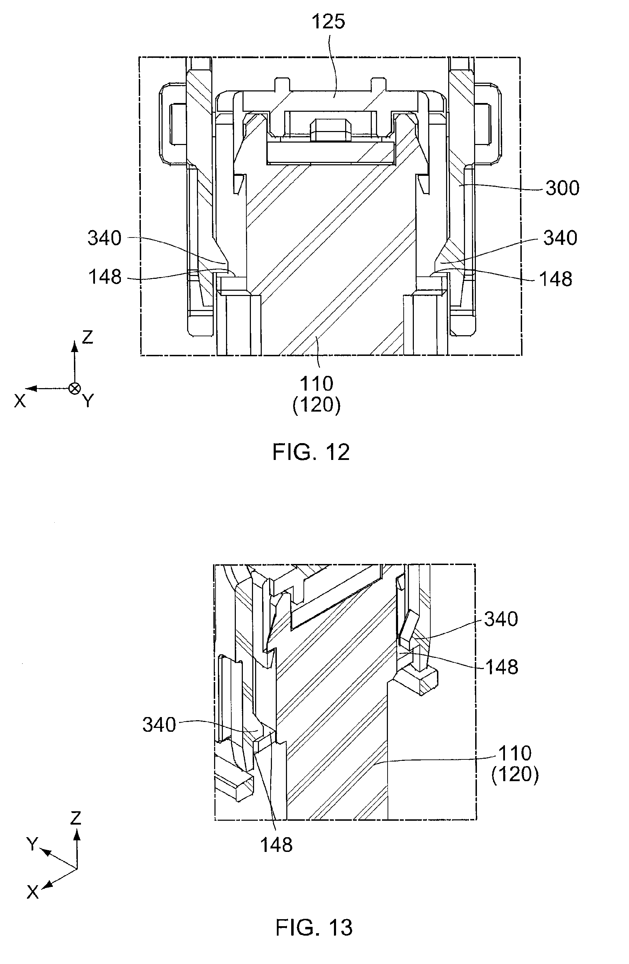

As shown in Figs. 14 to 16, each of the ends of the unlock portions 540 has a surface oblique to the Z-direction. When the first connector 100 is mated with the second connector 500, the unlock portion 540 is inserted between the temporally prevention portion 148 and the lock portion 340 (see Figs. 12 and 13) to move and to separate the lock portion 340 from the temporally prevention portion 148. Since the operation member 300 is unlocked from the lock portion 340, the first operation that turns the operation member 300 in the regular direction is enabled.

As shown in Figs. 39, 41 and 43, in the first operation, the second position-adjustment protrusion 530 adjusts the position of the first detection connector 200 together with the first position-adjustment protrusion 220 formed in the first detection housing 210.

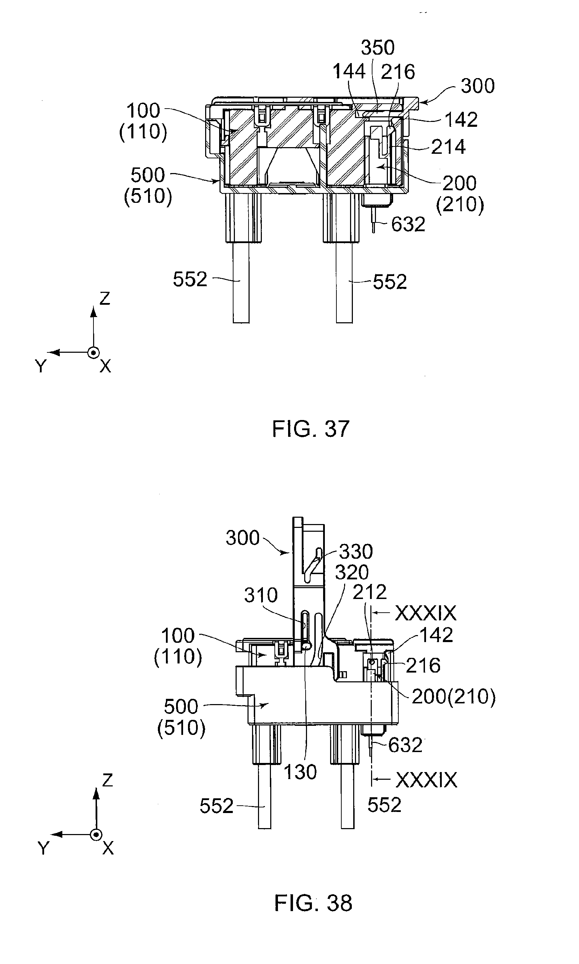

In detail, as shown in Figs. 38 and 39, if the first detection connector 200 is not located at the first position, the first detection terminal 240 might be connected to the second detection terminals 630 when the first connector 100 is mated with the second connector 500 by the first operation. However, as described later, the first detection terminal 240 needs to be separated from the second detection terminals 630 before the second operation is done. Accordingly, if the first detection terminal 240 is not located at the first position before the first connector 100 is mated with the second connector 500, it is desirable that the first detection connector 200 is moved to the first position at least until the beginning of the second operation.

In the present embodiment, even if the first detection connector 200 is not located at the first position under the pre-mated state where the first connector 100 is not mated with the second connector 500, the first operation makes the first position-adjustment protrusion 220 and the second position-adjustment protrusion 530 interfere with each other in the Z-direction to prevent the first detection terminal 240 and the second detection terminal 630 from being connected to each other.

More specifically, according to the present embodiment, under the pre-mated state where the first connector 100 is not mated with the second connector 500, the second position-adjustment protrusion 530 is located toward the negative Z-side, or under, the first position-adjustment protrusion 220. If the first detection connector 200 is not located at the first position under the pre-mated state, the first operation makes the second position-adjustment protrusion 530 interfere with the first position-adjustment protrusion 220 in the Z-direction to move the first detection connector 200 toward the first position.

Moreover, as previously described, in the present embodiment, the first position-adjustment protrusion 220 is supported by the resilient support portion 218. In the second operation, the first position-adjustment protrusion 220 surmounts the second position-adjustment protrusion 530 to be located toward the negative Z-side, or under, the second position-adjustment protrusion 530. Accordingly, the position-adjustment structure, which is formed of the first position-adjustment protrusion 220 and the second position-adjustment protrusion 530, does not interfere with the proper mating of the first detection connector 200 with the second detection connector 600.

Hereafter, as referring to Figs. 17 to 37, explanation is made about the operation of the operation member 300 and the works of various portions related to this operation.

As shown in Figs. 17 to 20, the first connector 100 under the pre-mated state is inserted into the second connector 500 to start to be mated with the second connector 500. At this stage, as shown in Fig. 19, the first power terminal 170 is not connected to the second power terminals 550. As shown in Fig. 20, the first cam protrusion 520 is received in the first cam ditch 320. Moreover, as can be seen from Figs. 6, 7, 14 and 15, since the operation member 300 is unlocked from the lock portion 340, the operation member 300 can be turned.

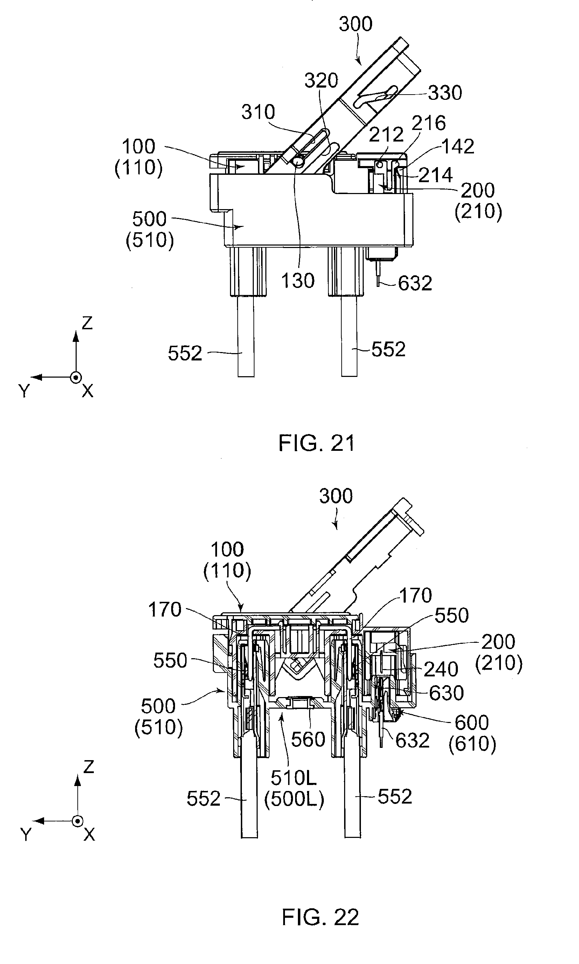

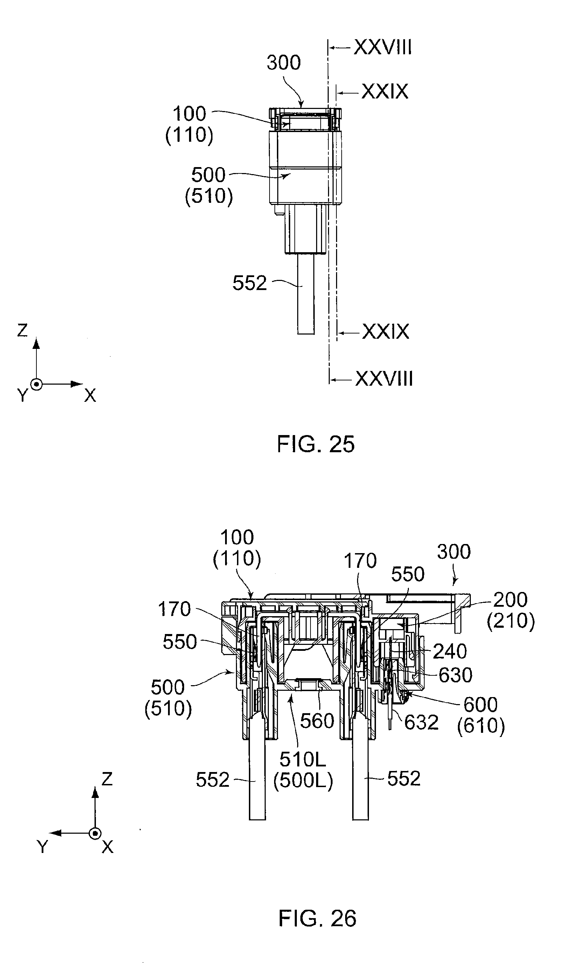

When the first operation is done to turn the operation member 300, the connector device is transferred to a first-mated state as shown in Figs. 24 to 29 via a state as shown in Figs. 21 to 23. As shown in Figs. 20, 23 and 27, in the first operation, the first cam ditch 320 receives the first cam protrusion 520 and applies a force along the Z-direction to the first cam protrusion 520. More specifically, during the first operation, the first cam protrusion 520 is moved along the first cam ditch 320 while receiving a downward force along the negative Z-direction from the first cam ditch 320. Because the first connector 100 is moved relative to the second connector 500 along the negative Z-direction by this downward force, the connector device is transferred to the first-mated state. As can be seen from Figs. 22 and 26, under the first-mated state, the first connector 100 is mated with the second connector 500, and the first power terminal 170 is connected to the second power terminals 550.

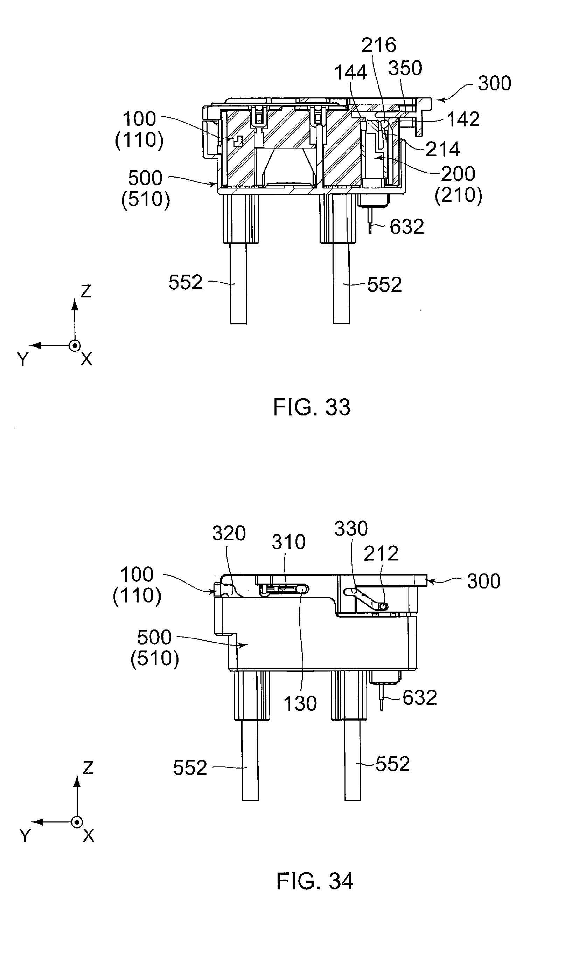

When the second operation subsequent to the first operation is done to horizontally move the operation member 300, the connector device is transferred to a second-mated state as shown in Figs. 34 to 37 via a state as shown in Figs. 30 to 33. As shown in Fig. 33, during the second operation, the regulated portion 350 is inserted in the regulation ditch 144. Accordingly, the operation member 300 cannot be lifted up nor stood up.

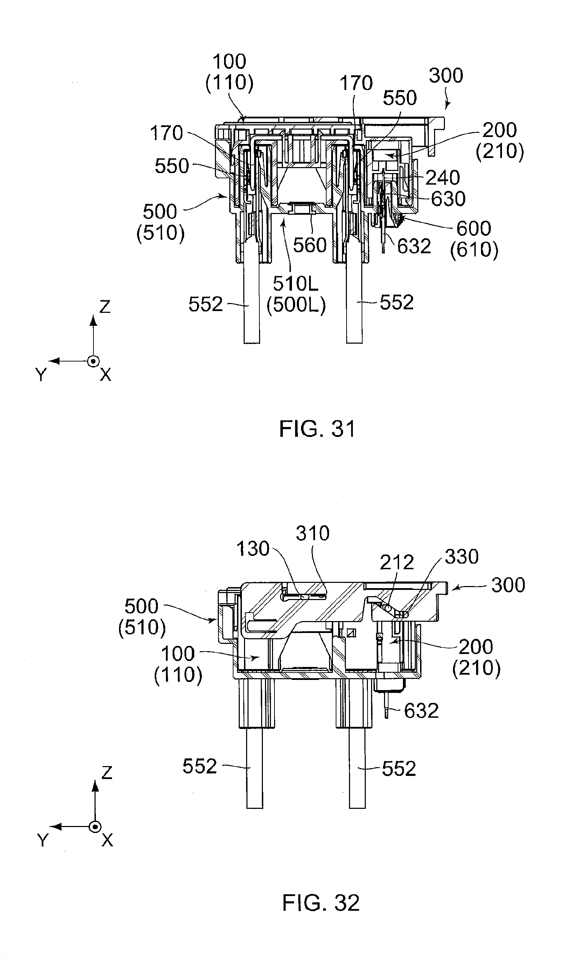

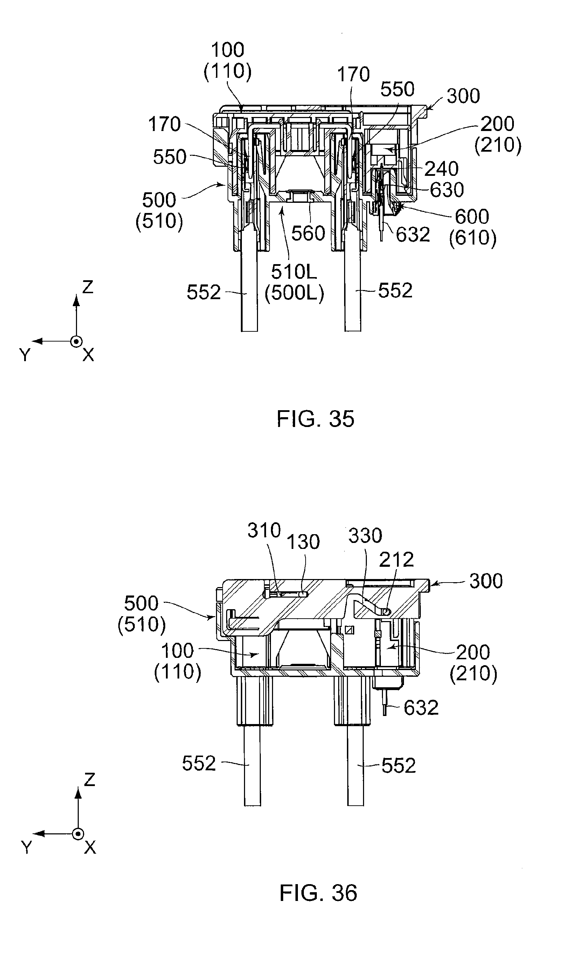

As shown in Figs. 28, 32 and 36, during the second operation, the second cam protrusion 212 is moved along the second cam ditch 330 while receiving a downward force along the negative Z-direction from the second cam ditch 330. Because the first detection connector 200 is moved relative to the second detection connector 600 along the negative Z-direction by this downward force, the connector device is transferred to the second-mated state. As can be seen from Figs. 31 and 35, under the second-mated state, the first detection connector 200 is mated with the second detection connector 600, and the first detection terminal 240 is connected to the second detection terminals 630. Accordingly, electric current flows through the first power terminal 170 and the second power terminals 550.

When the first connector 100 is removed from the second connector 500, the aforementioned operations are done reversely. More specifically, first, the operation member 300 is moved in the negative Y-direction. This operation removes the first detection connector 200 from the second detection connector 600 and disconnects the first detection terminal 240 from the second detection terminal 630. Accordingly, the electric power supplied to the first power terminal 170 and the second power terminals 550 is stopped. Subsequently, the operation member 300 is stood up or lifted up. This operation moves the first connector 100 relative to the second connector 500 in the Z-direction to separate the first connector 100 from the second connector 500 and disconnect the first power terminal 170 from the second power terminals 550.

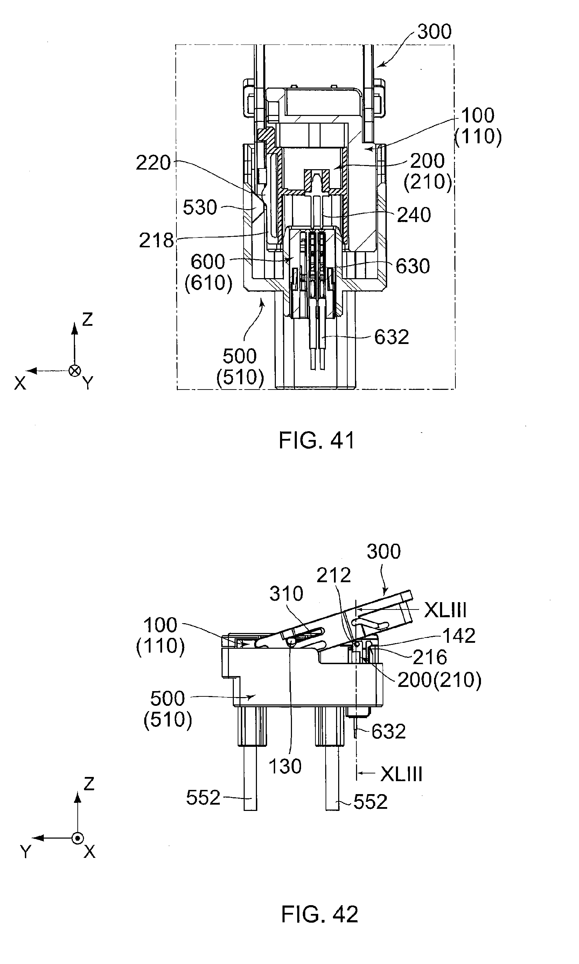

As previously described, according to the present embodiment, as shown in Figs. 38 and 39, even if the first detection connector 200 is not located at the first position under the pre-mated state of the first connector 100 and the second connector 500, the first detection terminal 240 can be prevented, in the first operation, from being connected to the second detection terminals 630. More specifically, as shown in Figs. 38 and 39, upon the insertion of the first connector 100 into the second connector 500, the first position-adjustment protrusion 220 interferes with the second position-adjustment protrusion 530 so that the first detection connector 200 is moved relative to the first housing 110 in the positive Z-direction (upward). Accordingly, contact of the first detection terminal 240 with the second detection terminals 630 can be avoided. Moreover, as shown in Figs. 40 and 42, as the operation member 300 is turned, only the first housing 110, or the first connector 100, is moved in the negative Z-direction (downward) since the first position-adjustment protrusion 220 interferes with the second position-adjustment protrusion 530. As a result, the first detection connector 200 is kept to be moved relative to the first housing 110 in the positive Z-direction (upward) to be returned to the first position.

The connector device according to the present embodiment is designed so that the connection of the first power terminal 170 to the second power terminals 550 is done by the first operation that turns the operation member 300 while the connection of the first detection terminal 240 to the second detection terminals 630 is done by the second operation that horizontally moves the operation member 300. The connection of the first detection terminal 240 to the second detection terminals 630 is done at timing separated from that of the connection of the first power terminal 170 to the second power terminals 550. An operator therefore can safely operate the connector device, for example, without being electrically shocked.

Moreover, in the connector device according to the present embodiment, the first detection connector 200 is held to be movable relative to the first housing 110 in the Z-direction in order to enable the aforementioned operations. Accordingly, the connector device according to the present embodiment can be formed without having excessively large size in the XY-plane. According to the present embodiment, when the connector device is attached to an electric car or a hybrid car, no large accommodation space is needed. Moreover, even in the operation after the attachment, no large work space is needed. Moreover, all of the cables 552 and the signal detection lines 632 can be pulled out from the bottom portion 500L of the second connector 500.

The connector device according to the aforementioned embodiment is configured so that the second operation can be done smoothly. However, the connector device may be intentionally configured so that the second operation cannot be done smoothly.

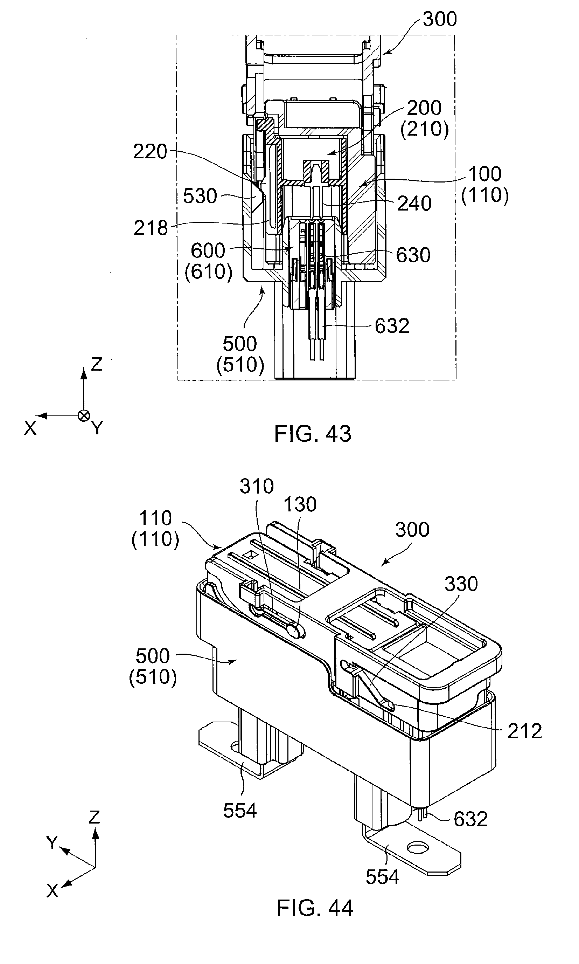

In the aforementioned embodiment, although the power line connected to the second power terminal 550 is the cable 552, the present invention is not limited thereto. For example, as shown in Fig. 44, the second power terminal 550 may be connected to a busbar (power line) 554.

The present application is based on a Japanese patent application of JP2013-119742 filed before the Japan Patent Office on June 6, 2013, the contents of which are incorporated herein by reference.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. A connector device comprising:
a first connector including a first housing and a first power terminal, the first power terminal being held by the first housing;
a first detection connector including a first detection terminal, the first detection connector being held by the first housing and being movable relative to the first housing between a first position and a second position along a first direction;
a second connector including a second power terminal, a second detection terminal and a second housing, the second power terminal and the second detection terminal being held by the second housing, the second connector being mateable with the first connector along the first direction; and
an operation member attached to the first housing, the operation member being movable relative to the first housing by each of a first operation and a second operation, the first operation being an operation which turns the operation member, the second operation being another operation which moves the operation member along a second direction perpendicular to the first direction, the first operation moving the first connector along the first direction relative to the second connector and connecting the first power terminal to the second power terminal, the second operation subsequent to the first operation moving the first detection connector along the first direction from the first position to the second position and connecting the first detection terminal to the second detection terminal.

2. The connector device as recited in claim 1, wherein:
the first housing is formed with a guided protrusion protruding outward in a third direction perpendicular to both the first direction and the second direction;
the second housing is formed with a first cam protrusion protruding inward in the third direction;
the first detection connector is formed with a second cam protrusion protruding outward in the third direction;
the operation member is formed with a guide ditch, a first cam ditch and a second cam ditch;
the guide ditch receives the guided protrusion;
the guided protrusion is guided by the guide ditch in each of the first operation and the second operation;
in the first operation, the first cam ditch receives the first cam protrusion and applies a force along the first direction to the first cam protrusion; and
in the second operation, the second cam ditch receives the second cam protrusion and applies another force along the first direction to the second cam protrusion.

3. The connector device as recited in claim 1 or 2, wherein:
the first detection connector is formed with a first position-adjustment protrusion protruding in an orthogonal direction perpendicular to the first direction;
the second housing is formed with a second position-adjustment protrusion protruding in the orthogonal direction; and
when the first detection connector is not located at the first position under a state where the first connector is not mated with the second connector, the first operation makes the first position-adjustment protrusion and the second position-adjustment protrusion interfere with each other in the first direction to prevent the first detection terminal and the second detection terminal from being connected to each other.

4. The connector device as recited in claim 3, wherein when the first detection connector is not located at the first position under a state where the first connector is not mated with the second connector, the first operation makes the second position-adjustment protrusion interfere with the first position-adjustment protrusion in the first direction to move the first detection connector toward the first position.

5. The connector device as recited in claim 4, wherein the first position-adjustment protrusion surmounts the second position-adjustment protrusion in the second operation.

6. The connector device as recited in one of claims 1 to 5, wherein:
the first housing is provided with a temporally holding portion; and
under a state where the first connector is not mated with the second connector, the temporally holding portion temporally holds the first detection connector at the first position.

7. The connector device as recited in one of claims 1 to 6, wherein:
the first housing is formed with a removal-prevention protrusion; and
the removal-prevention protrusion prevents the first detection connector from passing the second position to be removed from the first housing.

8. The connector device as recited in one of claims 1 to 7, wherein:
the first housing is formed with a temporally prevention portion; and
until the first connector begins to be mated with the second connector, the temporally prevention portion temporally prevents the operation member from being turned.

9. The connector device as recited in one of claims 1 to 8, wherein:
the operation member is turnable in a regular direction;
the first housing is formed with a prevention portion; and
the prevention portion prevents the operation member from being turned in a direction opposite to the regular direction.

10. The connector device as recited in one of claims 1 to 9, wherein:
the first housing is formed with a regulation ditch which extends along the second direction;
the operation member is formed with a regulated portion; and
in the second operation, the regulated portion is inserted in the regulation ditch to prevent the operation member from being lifted up.

11. The connector device as recited in one of claims 1 to 10, wherein:
the first connector is to be inserted and received into the second connector from an upper portion toward a bottom portion of the second connector;
the second power terminal is connected with a power line;
the second detection connector is connected with a signal detection line; and
the power line and the signal detection line extend outside from a bottom portion of the second housing.
